(19) Europäisches Patentamt
European Patent Office
Office européen des brevets

(11) **EP 3 573 012 A1**

(12) **EUROPEAN PATENT APPLICATION**

(43) Date of publication:
**27.11.2019 Bulletin 2019/48**

(51) Int Cl.:
***G06Q 50/04*** *(2012.01)*

(21) Application number: **18173665.3**

(22) Date of filing: **22.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
- **Fromm-Ayass, Reinhard**
  **92348 Berg (DE)**
- **Hildebrandt, Marcel**
  **81737 München (DE)**
- **Koch, Roland**
  **96114 Hirschaid (DE)**
- **Mogoreanu, Serghei**
  **81827 München (DE)**
- **Thon, Ingo**
  **81541 Muenchen (DE)**

(54) **PLATFORM FOR SELECTION OF ITEMS USED FOR THE CONFIGURATION OF AN INDUSTRIAL SYSTEM**

(57)     A platform used for selection of items from context aware sorted available items in a selection session, wherein the selected items are used for the configuration of a system, in particular an industrial system, said platform comprising a processing unit adapted to calculate a compressed vector, W, as an orthogonal projection of a numerical vector, V, representing items selected in a current selection session as context, wherein the compressed vector, W, is calculated on the basis of a relationship tensor, $T_r$, representing relations, r, between selections of items performed in historical selection sessions and available items, wherein the available items are sorted automatically by said processing unit for selection in the current selection session according to relevance scores of a score vector, S, calculated by said processing unit for the compressed vector, W.

FIG 1

**Description**

The invention relates to a platform configured to select items which can be used for the configuration of a technical system, in particular an industrial system comprising a plurality of items, in particular hardware components and/or software components of the system.

A technical system, in particular an industrial system, can be very complex and comprise a plurality of different subsystems and/or components. Each component can comprise a variety of different features required for the operation of the respective system. The industrial system can be for instance a manufacturing facility having a plurality of machines connected to each other in a communication subsystem and having a plurality of machine tools and/or hardware components controlled by control components adapted to execute software components during the manufacturing process. All these components form items required for setting up the respective technical system. For implementing such an industrial system, in particular an industrial manufacturing system, it is necessary to provide a plurality of items provided by the manufacturer of the components or a component provider. An end customer planning to build an industrial system or a complex product needs to order a plurality of different items or components. Conventionally, end customers have access to product lists of the manufacturer listing a plurality of different available items or components offered by the respective manufacturer. A complex system or a complex product consists normally of several components or items which are typically bought together. For selection of the components, the provided product lists are normally sorted based on some criteria. The sorting criteria can comprise for instance the product name where the products are sorted alphabetically. Further sorting criteria can be for instance the product price of the respective item or component where the items are sorted according to the increasing or decreasing price per component. A further possible sorting criteria is the product release date of the respective item.

Conventional platforms also provide additional services to the end customer such as recommending items which have been bought together in the past most often at the top of a ranking list. These conventional services are mostly based on the historic selections performed by same or different users. These conventional platforms actually fail in scenarios where historic selection data is missing or not available to the platform. Further, conventional platforms fail to recognize contextual aspects of the current selection session and of the items themselves. A contextual aspect is for instance formed by the items currently selected in the current selection session.

Accordingly, there is a need to provide a method and a platform which provides for a context aware sorting of items available for the configuration of a technical system during a selection session.

This object is achieved according to a first aspect of the present invention by a method for context aware sorting of items available for the configuration of the system comprising the features of claim 1.

The invention provides according to the first aspect a method for context aware sorting of items available for the configuration of a system, in particular an industrial system, during a selection session, wherein the method comprises the steps of:

providing a numerical vector representing items selected in a current selection session as context,
calculating a compressed vector as an orthogonal projection from the provided numerical vector on the basis of a relationship tensor representing relations between selections of items performed in historic selection sessions and the available items and
sorting automatically the available items for selection in the current selection session according to relevance scores of a score vector computed for the compressed vector.

In a possible embodiment of the method according to the first aspect of the present invention, the numerical vector comprises for each available item a vector element having a numerical value indicating how many of the respective available items have been selected by a user or agent in the current selection session.

In a further possible embodiment of the method according to the first aspect of the present invention, the relationship tensor is decomposed by means of tensor factorization into a relationship core tensor and factor matrices, wherein the relationship core tensor and the factor matrices are used to calculate the compressed vector from the numerical vector.

In a still further possible embodiment of the method according to the first aspect of the present invention, the relationship tensor is derived automatically from a stored knowledge graph wherein the knowledge graph comprises nodes representing historic selection sessions, nodes representing available items and nodes representing features of the available items and further comprises edges representing relations between nodes of the knowledge graph.

In a further possible embodiment of the method according to the first aspect of the present invention, the relationship tensor comprises a three-dimensional contain-relationship tensor wherein each tensor element of the three-dimensional contain-relationship tensor represents a triple within the knowledge graph,
wherein the triple consists of a first node representing a selection session, a second node representing an available item and a contain-relationship between both nodes indicating that the selection session represented by the first node of the knowledge graph contains the item represented by the second node of the knowledge graph.

In a further possible embodiment of the method according to the first aspect of the present invention, the three-dimensional relationship tensor comprises a sparse tensor, wherein each tensor element has a logic high value if the associated triple is existent in the stored knowledge graph and has a logic low value if the associated triple is not existent in the stored knowledge graph.

In a still further possible embodiment of the method according to the first aspect of the present invention, the relationship tensor is decomposed automatically via Tucker decomposition into a product consisting of a transponded factor matrix, a relationship core tensor and a factor matrix.

In a still further possible embodiment of the method according to the first aspect of the present invention, the score vector is computed as a product of the transponded compressed vector, the three-dimensional core contain-relationship tensor and of the factor matrix, wherein the score vector comprises as vector elements relevance scores for each available item used to sort automatically the available items in a ranking list for selection by a user or by an agent in the current selection session.

In a further possible embodiment of the method according to the first aspect of the present invention, the numerical value of each item within the numerical vector selected by the user or agent in the current selection session from the ranking list is automatically incremented.

In a still further possible embodiment of the method according to the first aspect of the present invention, the knowledge graph is generated automatically by combining historical selection session data comprising for all historic selection sessions the items selected in the respective historic selection sessions and technical data of the items comprising for each item features of the respective item.

In a still further possible embodiment of the method according to the first aspect of the present invention, if the current selection session is completed all items selected in the completed selection session and represented by the associated numerical vector are used to extend the historical selection session data.

In a further possible embodiment of the method according to the first aspect of the present invention, the extended historic selection session data is used to update the stored knowledge graph and/or to update the relationship tensor derived from the updated knowledge graph.

In a still further possible embodiment of the method according to the first aspect of the present invention, the steps of providing the numerical vector, calculating the compressed vector and sorting the available items for selection are performed iteratively until the current selection session is completed by the user or by the agent.

In a still further possible embodiment of the method according to the first aspect of the present invention, the available items comprise hardware components and/or software components selectable for the configuration of the respective system.

The invention further provides according to a further aspect a platform for selection of items comprising the features of claim 15.

The invention provides according to the second aspect a platform used for selection of items from context aware sorted available items in a selection session, wherein the selected items are used for the configuration of a system,
wherein said platform comprises
a processing unit adapted to calculate a compressed vector as an orthogonal projection of a numerical vector representing items selected in a current selection session as context,
wherein the compressed vector is calculated on the basis of a relationship tensor representing relations between selections of items performed in historic selection sessions and available items, wherein the available items are sorted automatically by said processing unit for selection in the current selection session according to relevance scores of a score vector calculated by said processing unit for the compressed vector.

In a possible embodiment of the platform according to the second aspect of the present invention, the processing unit has access to a memory of the platform which stores a knowledge graph and/or a relationship tensor derived from the knowledge graph.

In a still further possible embodiment of the platform according to the second aspect of the present invention, the platform comprises an interface used for selecting items in a selection session from a ranking list of available items sorted according to the relevance scores of the calculated score vector.

In the following, possible embodiments of the different aspects of the present invention are described in more detail with reference to the enclosed figures.

Fig. 1    shows a schematic block diagram for illustrating a possible exemplary embodiment of a platform for selection of items according to an aspect of the present invention;

Fig. 2    shows schematically an exemplary knowledge graph for illustrating the operation of the method and platform according to the present invention;

Fig. 3    illustrates schematically the decomposition of a tensor performed by the method and apparatus according to the present invention;

Fig. 4    shows a flowchart of a possible exemplary embodiment of a method for context aware sorting of items according to a further aspect of the present invention.

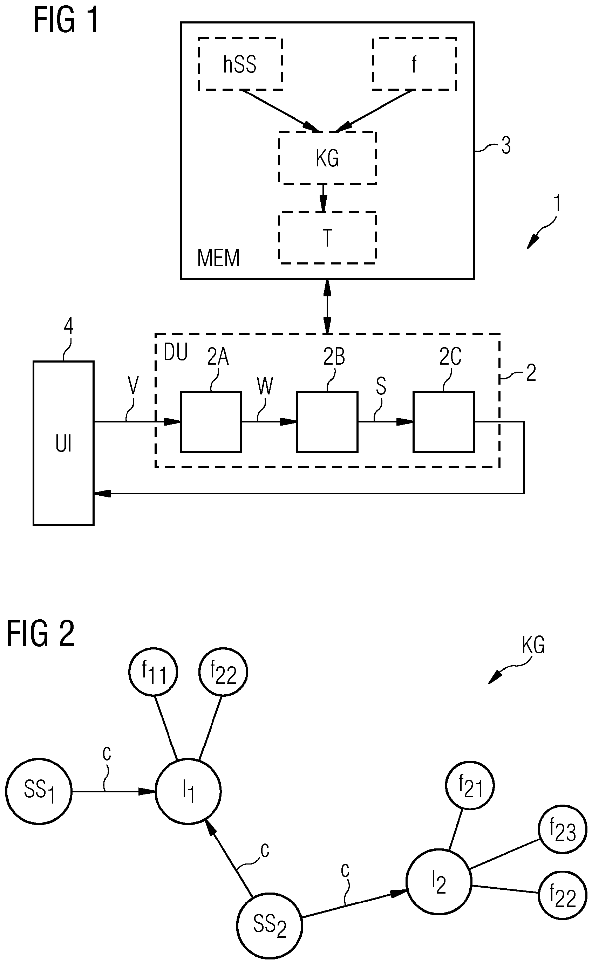

As can be seen in the block diagram of Fig. 1, a platform 1 according to an aspect of the present invention comprises in the illustrated embodiment a processing unit 2 having access to a memory or database 3. The platform 1 illustrated in Fig. 1 can be used for selection of items from context aware sorted available items in a selection session. The items can form a variety of different items used for the configuration of a technical system, in particular an industrial system requiring a plurality of different items for its configuration. The processing unit 2 can be implemented on a server of a service provider providing items which can be used by an end customer to build up an industrial system or a complex product from a plurality of different hardware and/or software components forming available items provided by the service provider. The processing unit 2 as shown in the embodiment of Fig. 1 can comprise several processing stages 2A, 2B, 2C each having at least one processor adapted to perform calculations. The processing unit 2 can have access to a local memory 3 or via a network to a remote memory 3. In the illustrated exemplary embodiment, the processing unit 2 comprises a first processing stage 2A adapted to process a numerical vector V received by the processing unit 2 via a user interface 4 of a user terminal operated by an end customer or user. In a possible embodiment, the user terminal 4 can also be connected via a data network to the processing unit 2 implemented on the server of the service provider. In a possible embodiment, to start a selection session the end customer has to be authorized by the platform 1. After having initiated the selection session the end customer can start to select items from available items provided by the service provider or manufacturer of the items, i.e. the hardware and/or software components necessary to implement or build the respective industrial system. These items can for instance comprise sensor items, actuator items or controller items as hardware components of the system. The items can also comprise software components, i.e. different versions of executable software programs. The numerical vector V is selected in the initiated current selection session as context to the platform 1. The processing unit 2 is adapted to calculate a compressed vector W as an orthogonal projection of the received numerical vector V representing the items selected in the current selection session. The compressed vector W is calculated on the basis of a relationship tensor $T_r$ representing relations r between selections of items performed in historic selection sessions and available items. The available items are sorted by the processing unit 2 for selection in the current selection session according to relevance scores of a score vector S calculated by the processing unit 2 for the compressed vector W.

In the illustrated exemplary embodiment of Fig. 1, the processing unit 2 comprises three processing stages. In the first processing stage 2A, the compressed vector W is calculated as the orthogonal projection of the received numerical vector V representing items selected by the customer in the current selection session as context. The numerical vector V comprises for each available item a vector element having a numerical value indicating how many of the respective available items have been selected by the user or agent in the current selection session. The number of vector elements within the numerical vector V corresponds to the number N of available items.

$$V = \begin{pmatrix} V_1 \\ V_2 \\ \\ V_N \end{pmatrix} \qquad\qquad (1)$$

For instance, a first vector element V1 comprises a value indicating how many of the first item have been selected by the customer in the current selection session. On the basis of the received numerical vector V, the first processing stage 2A of the processing unit 2 calculates a compressed vector W as the orthogonal projection from the received numerical vector V using a stored relationship tensor $T_r$ representing relations between selections of items performed in historic selection sessions and the available items. The relationship tensor $T_r$ is decomposed by means of tensor factorization into a relationship core tensor and factor matrices. The relationship core tensor and the factor matrices are used to calculate the compressed vector W from the received numerical vector V.

$$W = \begin{pmatrix} W_1 \\ W_2 \\ . \\ W_M \end{pmatrix} M << N \qquad\qquad (2)$$

The compressed vector W comprises M vector elements wherein M<<N. In a preferred embodiment, the decomposed relationship tensor $T_r$ is stored in the memory 3 as also illustrated in Fig. 1. The relationship tensor $T_r$ is derived automatically from a stored knowledge graph KG. Fig. 2 shows schematically such a knowledge graph KG. The knowledge graph KG comprises in a possible embodiment nodes representing historic selection sessions SS, nodes representing available items such as system components and/or nodes representing features f of available items. The different nodes of the knowledge graph KG are connected via edges representing the relations r between nodes of the knowledge graph KG. One of the relations r is a contain relation c as illustrated in Fig. 2. In the illustrated example of Fig. 2, the historic selection session SS1 contains the item I1, for instance a specific controller which can be used for the implementation of a production facility. Further, another historic selection session SS2 also contains this item I1. The second historic selection session SS2 further contains a second item I2 as shown in Fig. 2. All items I1, I2 can comprise one or several features f, in particular technical features. The relationships within the knowledge graph KG can comprise other relations such as type or size or e.g. a specific supply voltage. In a possible embodiment, the knowledge graph KG as illustrated schematically in Fig. 2 can be enriched by the platform owner of the platform 1. In a possible embodiment, the knowledge graph KG stored in the memory 3 can be generated automatically by combining historical selection session data hss and technical data comprising for each item features f of the respective item as also illustrated in Fig. 1. The historical selection session data can comprise for all historic selection sessions SS performed by the same or different users the items selected in the respective historic selection session SS. For instance, historic selection session data can comprise a list of all historic selection sessions SS and the associated items selected within the respective historic selection session SS. The features f of the items can comprise technical features such as type, size or supply voltage of the item. Other examples of the features f can also comprise different operation modes available for the specific item. For instance, a feature f can indicate whether the respective component provides a fail-safe operation mode or not. Besides the technical features f, the knowledge graph KG can also comprise additional features f such as the price of the respective item. In a possible embodiment, the knowledge graph KG is generated automatically by combining the available historic selection session data and the available known features f of the items in a preparation phase. Further, it is possible to derive in the preparation phase a corresponding relation tensor automatically from the generated knowledge graph KG database. Further, it is possible that the generated tensor T is also already decomposed to provide a core tensor available to the processing unit 2 of the platform 1.

The first processing stage 2A of the processing unit 2 is adapted to calculate a compressed vector W as an orthogonal projection from the received numerical vector V on the basis of a stored decomposed relationship tensor $T_r$ representing relations between selections of items performed in historic selection sessions SS and the available items.

The relationship tensor $T_r$ can be decomposed according to the following equation:

$$T_r = P^T G_r P \qquad (3)$$

The second processing stage 2B of the processing unit 2 is adapted to calculate a score vector S for the compressed vector W output by the first processing stage 2A. The score vector S provides relevance scores for the different available items.

The compressed vector W calculated by the first processing stage 2A can be calculated as follows:

$$W = [(G_c P)(G_c P)^T]^{-1} \cdot (G_c \cdot P) \cdot V \qquad (4)$$

On the basis of the calculated compressed vector W, it is possible to calculate the score vector S as follows:

$$S = W^T G_c P \qquad (5)$$

The third processing stage 2C of the processing unit 2 is adapted to sort automatically the available items for selection in the current selection session according to the relevant scores of the calculated score vector S.

In a possible embodiment, the relationship tensor $T_r$ comprises a three-dimensional contain-relationship core tensor $G_c$. Each tensor element of the three-dimensional contain-relationship core tensor $G_c$ represents a triple t within the knowledge graph KG.

$$Triples: \quad \langle SS_i; c; I_j \rangle \qquad (6)$$

Each triple t consists of a first node n1 representing a selection session SS in the knowledge graph KG, a second node n2 representing an available item I in the knowledge graph KG and a contain-relationship c between both nodes n1, n2 indicating that the selection session SS represented by the first node n1 of the knowledge graph KG does contain the item I represented by the second node n2 of the knowledge graph KG. For instance, a tensor element of the three-dimensional relationship tensor $T_r$ represents a triple SS1, c, I1 in the knowledge graph KG shown in Fig. 2. The three-dimensional relationship tensor $T_r$ comprises accordingly a sparse tensor. Each tensor element within the three-dimensional relationship tensor $T_r$ comprises a logic high value (H) if the associated triple t is existent in the stored knowledge graph KG and comprises a logic low value (L) if the associated triple is not existent in the stored knowledge graph KG. In a possible embodiment, the stored relationship tensor $T_r$ can be decomposed automatically via Tucker decomposition into a product consisting of a transponded factor matrix $P^T$, a relationship core tensor $G_r$, and a factor matrix P as expressed in equation (3) above. The score vector S can be computed by the second stage 2B of the processing unit 2 as a product of the transponded compressed vector W, the three-dimensional core contain-relationship tensor $G_c$ and the factor matrix P as indicated in equation (4). The calculated score vector S comprises as vector elements relevance scores for each available item I used by the sorting stage 2C to sort the available items I in a ranking list for selection by a user or by an agent in the current selection session SS. The items I sorted according to the ranking list can be displayed in a possible embodiment on a display of a graphical user interface 4 to the user performing the selection in the current selection session SS. If the user selects an item from the available items, the vector element of the numerical vector V is incremented by the number of items selected by the user. The numerical value of each item I within the numerical vector V selected by the user or agent in the current selection session SS from the ranking list is automatically incremented. If the current selection session SS is completed all items I selected in the completed selection session SS and represented by its associated numerical vector V can be used to extend the historical selection session data stored in the memory 3 of the platform 1. The extended historic selection session data can be used to update the stored knowledge graph KG and to update the relationship tensor $T_r$ derived from the updated knowledge graph KG.

The processing steps of providing the numerical vector V calculating the compressed vector W and sorting available items I for selection performed within the stages of the processing unit 2 can be performed in possible embodiment iteratively until the current selection session SS is completed by the user or agent.

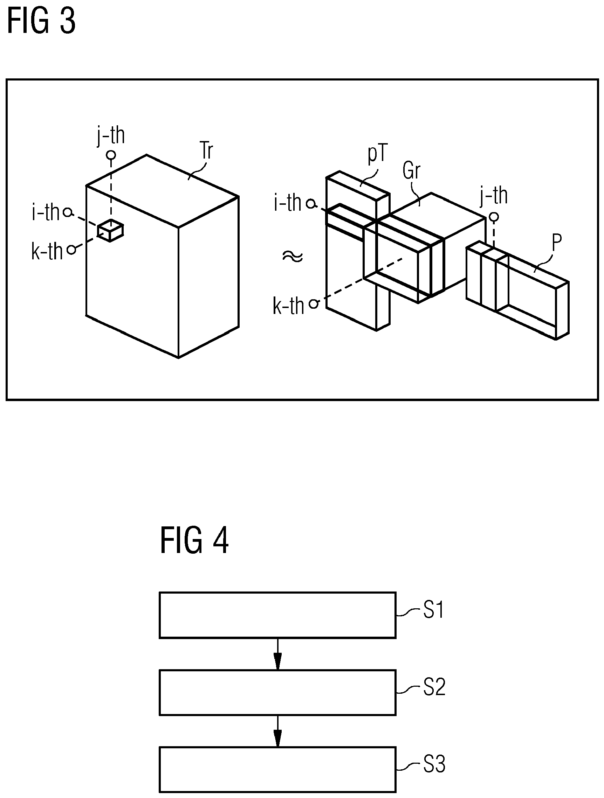

Fig. 4 shows a flowchart of a possible exemplary embodiment of a method for context aware sorting of items available for the configuration of a system, in particular an industrial system, during a selection session.

In the illustrated exemplary embodiment, the method comprises three main steps S1, S2, S3.

In a first step S1, a numerical vector V representing items I selected in the current selection session SS are provided as context for the sorting.

In a further step S2, a compressed vector W is calculated as an orthogonal projection from the provided numerical vector V on the basis of a stored relationship tensor $T_r$ representing relations between selections of items performed in historic selection sessions SS and the available items I.

Further, in a step S3, the available items I are sorted automatically for selection in the current selection session SS according to relevance scores of a score vector S computed for the compressed vector W.

The platform 1 according to the present invention takes into account contextual properties of selection sessions. The platform 1 makes use of a knowledge database which can contain historic data of selection sessions SS formed by users in the past but also descriptive features of the different available items. This leads to a graph-structured, multirelational data description, i.e. knowledge graph KG, which is equivalently represented as a high-dimensional tensor T. In this setting, predicting an edge in the knowledge graph KG corresponds to predicting a positive entry in the knowledge tensor. The method exploits the sparsity of this knowledge tensor by finding a low rank approximation via tensor factorization such as Tucker decomposition of the tensor. The platform 1 as illustrated in Fig. 1 takes into account the current configuration of the project, i.e. the items selected by the user in the current selection session SS as well as descriptive features f of the available items and not just historical data about the past user behavior. In a preparation phase of the platform 1, a joint database and a fitting tensor factorization model is formed. This is resource-consuming and can be executed either in regular time intervals or when new information data becomes available and is included into the database 3.

In a separate execution phase, the end customer or agent can perform a process of configuration of the respective industrial system. During the execution phase, the method for context aware sorting of items for the configuration of the system as illustrated in Fig. 4 can be performed by a processing unit of the platform. It provides for a dynamic adjustment of the order of the displayed or output items depending on the current user action of the items. The sorting of the items is performed on the basis of the compressed vector W which can be implemented efficiently and executed multiple times as the customer modifies his selection in the current selection session SS. The historic selection session data stored in the database 3 can contain information about previously configured solutions with respect to the implemented system. This can be typically an integer-valued data matrix stored in CSV data format, where the rows correspond to the different project solutions, i.e. historic selection sessions and comprising columns corresponding to the different available items.

Further, the database 3 can comprise technical information of the different items. This data can comprise detailed technical information about each item such as type information, voltage, size, etc.

The knowledge graph KG can comprise merged information of the historical selection session data and the technical information about the features f. The knowledge graph KG can be stored e.g. in an RDF format or as a triple store. The knowledge graph KG can equivalently be represented as a sparse numerical tensor with three modes, where the frontal slices correspond to adjacency matrices with respect to the different edge types and/or relations. A factorized tensor forming a low-rank approximation of the knowledge graph KG can be stored in a set of numerical tensors. Different processes can be used to compute a tensor factorization such as Tucker decomposition or CP decomposition.

The numerical vector V corresponds to a new selection session SS that is in the process of configuration, i.e. where a customer can currently add further items into the selection.

The compressed vector W is a numerical vector that contains a model-based compression of the numerical vector V. The sorting stage can provide a rank list of items, i.e. a model-based ranking of all items specific to the current selection within the current selection session. The items are presented to the user on the user interface 4 in a sorted order according to the calculated rank of the item. Ranking helps the customer or user to find the items that he wants to configure quickly by displaying the most relevant items in an exposed top position of a list. Further, the sorting according to the rank helps the user to know which items match the current selection input by the user into the user interface 4. Ranking can serve as an indicator which item complements the already configured components or items selected in the current selection session. Assisted by the ranking, the user can add additional items into a selected group of items of the current selection session SS. The numerical vector V is updated accordingly in the current selection session.

The platform 1 according to the present invention as illustrated in Fig. 1 can take into account the context in which a purchase order or selection has been made, i.e. what other items have already been selected by the end customer in the current selection session SS. This allows the platform 1 to estimate what might be the end goal of the end customer with respect to the chosen components or items.

Further, the platform 1 takes into account the predefined relationships between the items, e.g. area of application, compatibility, item "tier", etc. This contextual knowledge enhances significantly the overall quality of the inherent recommendations of items for the further selection provided by the sorting of the output items. Further, if an item I is previously unseen, the platform 1 can still make meaningful recommendations by embedding the item I into the previously constructed latent space via its contextual description.

The method for context aware sorting of items I according to the present invention can be performed in a fully automated process generating functions in a source code of a product configurator platform. The platform 1 allows to rank items including hardware and/or software components intelligently making the setting up of an industrial system easier and speeding up the process of configuration of a technical system. In a possible embodiment, the knowledge graph KG can also be enriched by the platform owner of the platform 1. In a possible embodiment, the knowledge graph KG also illustrated in Fig. 2 can be editable and displayed to the platform owner for enriching the graph with additional nodes and/or edges, in particular relevant features f.

In a preferred embodiment, the platform 1 and method according to the present invention makes use of tensor decompositions to calculate a score vector S with relevance scores used to sort available items I. A three-dimensional tensor can be seen as a data cube having tensor elements. In a possible embodiment of the platform 1 according to the present invention the tensor elements correspond to triples in the knowledge graph KG. Different algorithms can be employed for tensor decomposition of the tensor T. In a possible embodiment, a Tucker decomposition is applied. In an alternative embodiment, canonical polyadic decomposition CPD can be applied. The decomposition algorithm can be performed by a processor of the processing unit 2. The Tucker decomposition decomposes the tensor T into a so-called core tensor G and multiple matrices which can correspond to different core scalings along each mode. A core tensor G does express how and to which extent different tensor elements interact with each other.

**Claims**

1. A method for context aware sorting of items available for the configuration of a system during a selection session, the method comprising the steps of:

   (a) providing (S1) a numerical vector, V, representing items selected in a current selection session as context;
   (b) calculating (S2) a compressed vector, W, as an orthogonal projection from the provided numerical vector, V, on the basis of a stored relationship tensor, $T_r$, representing relations, r, between selections of items performed in historical selection sessions and the available items; and
   (c) sorting (S3) automatically the available items for selection in the current selection session according to relevance scores of a score vector, S, computed for the compressed vector, W.

**2.** The method according to claim 1 wherein the numerical vector, V, comprises for each available item a vector element having a numerical value indicating how many of the respective available items have been selected by a user or agent in the current selection session.

**3.** The method according to claim 1 or 2 wherein the relationship tensor, $T_r$, is decomposed by means of tensor factorization into a relationship core tensor, $G_r$, and factor matrices, wherein the relationship core tensor, $G_r$, and the factor matrices are used to calculate the compressed vector, W, from the numerical vector, V.

**4.** The method according to any of the preceding claims 1 to 3 wherein the relationship tensor, $T_r$, is derived automatically from a stored knowledge graph, KG, wherein the knowledge graph, KG, comprises nodes, n, representing historical selection sessions, nodes, n, representing available items and nodes, n, representing technical features of the available items and further comprises edges, e, representing relationships, r, between nodes, n, of the knowledge graph, KG.

**5.** The method according to claim 4 wherein the relationship tensor, $T_r$, comprises a three-dimensional contain-relationship tensor, $T_c$, wherein each tensor element of the three-dimensional contain-relationship tensor, $T_c$, represents a triple, t, within the knowledge graph, KG, wherein the triplet consists of a first node, $n_1$, representing a selection session, a second node, $n_2$, representing an available item and a contain-relationship, $r_c$, between both nodes, $n_1$, $n_2$, indicating that the selection session represented by the first node $n_1$, of the knowledge graph, KG, contains the item represented by the second node $n_2$, of the knowledge graph, KG.

**6.** The method according to claim 5 wherein the three-dimensional relationship tensor, $T_r$, comprises a sparse tensor, wherein each tensor element has a logic high value if the associated triple, t, is existent in the stored knowledge graph, KG, and has a logic low value if the associated triple, t, is not existent in the stored knowledge graph, KG.

**7.** The method according to any of the preceding claims 3 to 6 wherein the relationship tensor, $T_r$, is decomposed automatically via Tacker-decomposition into a product comprising a transponded factor matrix, $p^T$, a relationship core tensor, $G_r$, and a factor matrix, P.

**8.** The method according to claim 7 wherein the score vector, S, is computed as a product of the transponded compressed vector, $W^T$, the three-dimensional core relationship tensor, $G_c$, and the factor matrix, P, wherein the score vector, S, comprises as vector elements relevance scores for each available item used to sort the available items in a ranking list for selection by a user or by an agent.

**9.** The method according to claim 8 wherein the numerical value of each item within the numerical vector, V, selected by the user or agent in the current selection session from the ranking list is automatically incremented.

**10.** The method according to any of the preceding claims 4 to 9 wherein the knowledge graph, KG, is generated automatically by combining historical selection session data comprising for all historical selection sessions the items selected in the respective historical selection sessions and technical data of the items comprising for each item features of the respective item.

**11.** The method according to claim 10 wherein if the current selection session is completed all items selected in the completed selection session and represented by the associated numerical vector, V, are used to extend the historical session data.

**12.** The method according to claim 11 wherein the extended historical session data is used to update the stored knowledge graph, KG, and to update the relationship tensor, $T_r$, derived from the updated knowledge graph, KG.

**13.** The method according to any of the preceding claims 1 to 12 wherein the steps of providing the numerical vector, V, calculating the compressed vector, W, and sorting the available items for selection are performed iteratively until the current selection session is completed by the user or agent.

**14.** The method according to any of the preceding claims 1 to 13 wherein the available items comprise hardware components and/or software components selectable for the configuration of the respective system.

**15.** A platform (1) used for selection of items from context aware sorted available items in a selection session,

wherein the selected items are used for the configuration of a system, in particular an industrial system,

said platform (1) comprising

a processing unit (2) adapted to calculate a compressed vector, W, as an orthogonal projection of a numerical vector, V, representing items selected in a current selection session as context,

wherein the compressed vector, W, is calculated on the basis of a relationship tensor, $T_r$, representing relations, r, between selections of items performed in historical selection sessions and available items,

wherein the available items are sorted automatically by said processing unit (2) for selection in the current selection session according to relevance scores of a score vector, S, calculated by said processing unit for the compressed vector, W.

16. The platform according to claim 15 wherein the processing unit has access to a memory (3) of the platform which stores a knowledge graph, KG, and/or a relationship tensor, $T_r$, derived from the knowledge graph, KG.

17. The platform according to claim 15 or 16 wherein the platform (1) comprises an interface (4) used for selecting items in a selection session from a ranking list of available items sorted according to the relevance scores of the calculated score vector, S.

FIG 1

hSS

f

KG

T

MEM

3

1

4

UI

V

DU

2A

W

2B

S

2C

2

FIG 2

KG

$f_{11}$

$f_{22}$

$c$

$SS_1$

$I_1$

$c$

$c$

$f_{21}$

$SS_2$

$I_2$

$f_{23}$

$f_{22}$

FIG 3

FIG 4

Europäisches
Patentamt

European
Patent Office

Office européen
des brevets

**EUROPEAN SEARCH REPORT**

Application Number

EP 18 17 3665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/318103 A1 (MATSUI TAKAHARU [JP] ET AL) 28 November 2013 (2013-11-28) * abstract * * paragraph [0030] - paragraph [0031]; figure 1 * ----- | 1-17 | INV. G06Q50/04 |

TECHNICAL FIELDS
SEARCHED (IPC)

G06Q

The present search report has been drawn up for all claims

| Place of search | Date of completion of the search | Examiner |
|---|---|---|
| Munich | 13 August 2018 | Weidmann, Matthias |

EPO FORM 1503 03.82 (P04C01)

**ANNEX TO THE EUROPEAN SEARCH REPORT
ON EUROPEAN PATENT APPLICATION NO.**

EP 18 17 3665

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2018

| Patent document cited in search report | Publication date | Patent family member(s) | Publication date |
|---|---|---|---|
| US 2013318103 A1 | 28-11-2013 | JP 5452534 B2<br>JP 2012208734 A<br>US 2013318103 A1<br>WO 2012132170 A1 | 26-03-2014<br>25-10-2012<br>28-11-2013<br>04-10-2012 |

EPO FORM P0459

For more details about this annex : see Official Journal of the European Patent Office, No. 12/82